Europäisches Patentamt

European Patent Office

Office européen des brevets

(19)

(11) Veröffentlichungsnummer: **0 231 440**
**B1**

(12) **EUROPÄISCHE PATENTSCHRIFT**

(45) Veröffentlichungstag der Patentschrift:
**03.01.90**

(21) Anmeldenummer: **86115010.0**

(22) Anmeldetag: **29.10.86**

(51) Int. Cl.⁴: **B60J 3/02**

(54) **Sonnenblende für Fahrzeuge.**

(30) Priorität: **07.02.86 DE 3603852**

(43) Veröffentlichungstag der Anmeldung:
**12.08.87 Patentblatt 87/33**

(45) Bekanntmachung des Hinweises auf die Patenterteilung:
**03.01.90 Patentblatt 90/1**

(84) Benannte Vertragsstaaten:
**DE FR GB IT SE**

(56) Entgegenhaltungen:
EP-A- 0 149 073
DE-A- 1 580 850
DE-A- 3 324 305
DE-A- 3 402 416

(73) Patentinhaber: **Gebr. Happich GmbH,**
**Postfach 10 02 49 Clausenbrücke 1,**
**D-5600 Wuppertal 1(DE)**

(84) Benannte Vertragsstaaten: **DE FR GB IT SE**

(73) Patentinhaber: **Daimler Benz Aktiengesellschaft,**
**Stuttgart-Untertürkheim Postfach 202,**
**D-7000 Stuttgart 60(DE)**

(84) Benannte Vertragsstaaten: **DE FR GB IT SE**

(72) Erfinder: **Stuck, Klaus, Dr., Thomas-Mann-Strasse 23,**
**D-4095 Meerbusch 2(DE)**
Erfinder: **Cziptschirsch, Kurt,**
**Konrad-Adenauer-Strasse 25, D-5620 Velbert 15(DE)**
Erfinder: **Juraschek, Peter, Vaihinger Strasse 81,**
**D-7140 Ludwigsburg 10(DE)**
Erfinder: **Nowak, Manfred, Steinberg 16,**
**D-5650 Solingen 1(DE)**
Erfinder: **Kaiser, Klaus Peter, Sellscheid 42,**
**D-5632 Wermelskirchen(DE)**

## Beschreibung

Die Erfindung bezieht sich auf eine Sonnenblende für Fahrzeuge mit einem Sonnenblendenkörper, der um eine Achse schwenkbar und auf dieser Achse längsverschiebbar angeordnet ist, wobei die Achse, gegen ein axiales Verschieben gesichert in einem Gleitkörper sitzt, der axial verschiebbar in einem rohrförmigen, im Bereich einer Längskante des Sonnenblendenkörpers eingebetteten Hohlkörper gelagert ist und wobei der Gleitkörper zumindest mit einem Andruckelement ausgerüstet ist das an der Innenwandung des rohrförmigen Hohlkörpers abgestützt ist.

Eine Sonnenblende der gattungsgemäßen Art ist in der DE-A 3 402 416 gezeigt und beschrieben. Bei dieser Sonnenblende ist die Achse drehfest mit einem Schiebestück verbunden, während dieses Schiebestück drehbewegich und axial verschiebbar in einem rohrförmigen zylindrischen Hohlkörper gelagert ist. Beide Enden des Hohlkörpers sind durch Stopfen verschlossen, von denen einer eine zentrale Führungsöffnung zum Durchtritt der Achse aufweist. Bei dieser bekannten Sonnenblende ist, um ein einfaches Verrasten in verschiedenen Winkelstellungen sowie eine leichtgängige, spielfreie, toleranzausgleichende Schiebelagerung auf der Achse bei Verwendung von mögichst wenigen, einfachen Bauteilen zu ermöglichen, vorgesehen, daß der Hohlkörper in seiner Wandung mindestens zwei in seiner Längsrichtung verlaufende, nach innen offene Rastnuten aufweist, und daß das freie Ende der Achse mit einem zylindrischen Schiebestück verbunden ist, das radiale Kanäle zur Aufnahme von federbelasteten mit den Rastnuten zusammenwirkenden Kugeln aufweist. Durch diese Lagerungsart des Schiebestücks ergibt sich ein Kugellagereffekt, so daß die Gefahr besteht, daß sich der Sonnenblendenkörper ungewollt in Achsrichtung verschiebt. Zudem erscheint es auch nachteilig, daß eine stufenlose Arretierung des Sonnenblendenkörpers in radialen Winkelstellungen nicht möglich ist.

Der vorliegenden Erfindung liegt nun die Aufgabe zugrunde, eine Sonnenblende der eingangs genannten Art derart weiterzubilden, daß der Sonnenblendenkörper bei Gewährleistung einer leichtgängigen, spielfreien, toleranzausgleichenden Lagerung, in jeder axialen als auch radialen Stellung auf der Achse zuverlässig gehalten ist.

Zur Lösung dieser Aufgabe ist erfindungsgemäß vorgesehen, daß die Achse drehbeweglich in einer Bohrung des Gleitkörpers gelagert ist, daß der Gleitkörper drehfest im rohrförmigen Hohlkörper gelagert ist und daß zumindest ein Andruckelement an der Achse abgestützt ist.

Durch die erfindungsgemäßen Maßnahmen ergibt sich eine spielfreie, toleranzausgleichende Lagerung der Achse in der Bohrung des Gleitkörpers und eine ebenso spielfreie, toleranzausgleichende Lagerung des Gleitkörpers im rohrförmigen Hohlkörper; denn durch die Andruckelemente werden sowohl die Achse als auch der Gleitkörper gegen die den Andruckelementen jeweils diametral gegenüberliegende Wandung der Bohrung bzw. des rohrförmigen Hohlkörpers gedrückt, wodurch zwischen der Achse und dem Gleitkörper und zwischen dem Gleitkörper und dem rohrförmigen Hohlkörper eine gewisse Flächenreibung entsteht. Bei richtiger Auswahl und Dimensionierung der Andruckelemente, die durch wenige Berechnungen und/oder Versuche schnell und einfach zu ermitteln sind, läßt sich eine Flächenreibung erzeugen, die eine selbsttätige Verstellung des Sonnenblendenkörpers verhindert aber von Hand ohne weiteres zu überwinden ist.

Zwecks Erzielung einer drehfesten Anordnung des Gleitkörpers in rohrförmigen Hohlkörper ist in Ausgestaltung der Erfindung vorgesehen, daß der Gleitkörper einen unrunden Querschnitt und der rohrförmige Hohlkörper einen diesem angepaßten Öffnungsquerschnitt aufweist. Dabei kann eine Weiterbildung der Erfindung darin bestehen, daß der Gleitkörper ein in Richtung der Achse langgestreckter Körper ist, dessen Querschnitt etwa die Form eines Rechtecks mit einer abgerundeten Schmalseite aufweist.

Weiterhin kann vorgesehen sein, daß der Gleitkörper zumindest eine sich vom Mantel bis zur Bohrung erstreckende radiale Öffnung aufweist und daß in der Öffnung zwei Andruckelemente und eine zwischen diesen sitzende, die Andruckelemente zum einen gegen die Achse und zum anderen gegen den Hohlkörper belastende Druckfeder angeordnet sind. Auf diese Weise kann man mit lediglich zwei Andruckelementen und lediglich einer Druckfeder eine selbsttätige, umgewollte Verstellung des Sonnenblendenkörpers in axialer und radialer Richtung verhindern.

Alternativ kann aber auch vorgesehen sein, daß der Gleitkörper mehrere, in axialer Richtung nebeneinander befindliche radiale Öffnungen aufweist, in denen jeweils eine Druckfeder und jeweils zumindest ein Andruckelement angeordnet ist. Hierdurch ergibt sich der Vorteil einer Montagevereinfachung, weil sich die Federkraft auf mehrere Federn, die gegenüber einer Einzelfeder eine wesentlich weichere Federkennlinie aufweisen können, verteilen läßt. Es ist jedoch wesentlich, daß bei Verwendung mehrerer Druckfedern jeweils eine einheitliche radiale Winkelstellung eingehalten wird, um eine jeweils einseitige radiale Belastung der Achse und des Gleitkörpers zu gewährleisten.

Gemäß einer zweckmäßigen Weiterbildung der Erfindung, bestehen die Andruckelemente aus Kugeln. Bevorzugterweise ist jedoch vorgesehen, daß die Andruckelemente aus gegen den rohrförmigen Hohlkörper wirkenden Kugeln und aus einer gegen die Achse wirkenden, parallel zur Achse ausgerichteten zylindrischen Rolle bestehen. Durch diese Maßnahme wird dem Umstand Rechnung getragen, daß eine Sonnenblende der Lebenserfahrung nach wesentlich öfter um die Achse geschwenkt als auf dieser axial verschoben wird und daß auf der Achse abrollende Kugeln, wegen der Punktberührung, einen höheren Achsenverschleiß als eine zylindrische Rolle verursachen können. Es soll jedoch erwähnt sein, daß ein mit dem rohrförmigen Hohlkörper zusammenwirkendes Andruckelement nicht notwendigerweise eine Kugel oder eine Rolle sein muß, sondern daß z.B. ein federbelasteter Gleitschuh oder dergleichen ebenso vorteilhaft eingesetzt werden kann.

Um absolut sicherzustellen, daß der Sonnenblendenkörper in seiner Nichtgebrauchslage, in der er etwa parallel zum Fahrzeugdach ausgerichtet ist, gehalten wird, kann eine Weiterbildung der Erfindung noch darin bestehen, daß die Achse eine muldenförmige oder rinnenförmige Rastausnehmung zum Einrasten von einem Andruckelement oder mehreren Andruckelementen aufweist.

Eine weitere vorteilhafte Ausgestaltung der Erfindung ist darin zu sehen, daß die Andruckelemente und die Druckfeder (n) in einem in einer radialen Ausnehmung des Gleitkörpers sitzenden Lagerkörper aus verschleißfestem Material angeordnet sind. Hierdurch läßt sich nicht nur eine erhöhte Lebensdauer und ein Einsatz einer minderwertigeren Materialqualität für den Gleitkörper, sondern insbesondere auch die Vormontage der Andruckelemente und Druckfeder (n) realisieren.

Gemäß einer weiteren, bevorzugten Ausgestaltung der Erfindung, ist der Gleitkörper einerseits mit einem inneren, radial gegen die Achse wirkenden federelastischen Andruckelement ausgerüstet und weist andererseits über den Umfang verteilte, die Abstützung des Gleitkörpers im Rohrkörper bewirkende äußere Andruckelemente auf. Dabei kann die Bohrung des Gleitkörpers eine radiale Erweiterung aufweisen, die ein als federnde Klemmplatte ausgebildetes Andruckelement aufnimmt. Weiterhin kann vorgesehen sein, daß die die Bohrung im Gleitkörper umgebende Wandung auf der der radialen Erweiterung diametral gegenüberliegenden Seite eine etwa den Abmessungen der Klemmplatte entsprechende Öffnung aufweist. Dadurch kann die radiale Erweiterung in einfacher Weise hergestellt und das federnde Andruckelement schnell und einfach durch die Öffnung hindurch montiert werden.

Weiterhin kann vorgesehen sein, daß die federnde Klemmplatte aus Federstahl besteht, eine etwa rechteckige Umrißkontur aufweist, an den Schmalseiten gleichsinnig um- oder abgebogen ist, mit den Um- oder Abbiegungen nach unten in die radiale Bohrungserweiterung eingesetzt ist, an jedem Längsrand einen diesen überragenden Vorsprung aufweist und im Gleitkörper dadurch gehalten ist, daß die Vorsprünge in fensterartige Löcher der die Bohrung des Gleitkörpers umgebenden Wandung eingreifen, wobei die Löcher senkrecht zur Ebene der Klemmplatte erweitert sind. Die Locherweiterungen lassen eine Relativbewegung der Klemmplatte senkrecht zur Achse zu, was besonders dann vorteilhaft ist, wenn die Achse, nach einem weiteren Merkmal der Erfindung, in dem mit dem Andruckelement bzw. der Klemmplatte in Berührung kommenden Bereich eine Abflachung aufweist.

Gemäß einer weiteren erfindungsgemäßen Maßnahme können die über den Umfang des Gleitkörpers verteilten äußeren Andruckelemente eine kalottenartige Gestaltung aufweisen, so daß zwischen dem rohrförmigen Hohlkörper und dem Gleitkörper nur wenige punktförmige Berührungsstellen vorliegen, was die leichtgängige Verschiebbarkeit fördert, insbesondere dann, wenn die äußeren Andruckelemente an den Endbereichen des Gleitkörpers angeordnet und dabei so um dessen Umfang verteilt sind, daß der Gleitkörper allseitig in dem rohrförmigen Hohlkörper durch die Andruckelemente abgestützt ist. Fernerhin ist es von Vorteil, daß der Gleitkörper im Bereich der äußeren Andruckelemente ein geringes Übermaß gegenüber dem Öffnungsquerschnitt des rohrförmigen Hohlkörpers aufweist. Beim Einstecken des Gleitkörpers in den rohrförmigen Hohlkörper kommt es durch das Übermaß der äußeren Andruckelemente zum Abschälen derselben bis auf Passmaß und/oder zu einer gewissen Verformung, was jeweils toleranzausgleichend wirkt. Einem Verschleiß kann durch Einfetten des rohrförmigen Hohlkörpers oder dadurch entgegengewirkt werden, daß der Gleitkörper aus einem Material mit selbstschmierenden Eigenschaften hergestellt wird. Vorzugsweise ist der Gleitkörper als Kunststoff-Spritzgußteil ausgebildet, wobei auch die äußeren Andruckelemente einstückig und materialeinheitlich mit dem Gleitkörper ausgebildet sein können.

Einer Weiterbildung der Erfindung zufolge kann weiterhin vorgesehen sein, daß die Achse zwecks axialer Festlegung am Gleitkörper einendig einen Konus und einen den Konus radial überragenden Pilzkopf trägt, wobei der Konus in einen am Gleitkörper angeordneten Fortsatz mit entsprechendem Gegenkonus eingreift und der Pilzkopf das freie Ende des Fortsatzes hintergreift.

Schließlich kann noch vorgesehen sein, daß der rohrförmige Hohlkörper, der vorzugsweise aus Leichtmetall besteht, an den Enden durch Stopfen verschlossen ist, von denen einer eine Führungsöffnung zum Durchtritt der Achse aufweist, während der andere eine mit dem Gleitkörper zusammenwirkende Einrichtung zum druckknopfartigen Ein- und Ausrasten aufweist, wobei ein Teil mit einer Aufnahme und das andere Teil mit einem Klipskörper versehen ist.

Ausführungsbeispiele der Erfindung werden nun anhand der Zeichnungen näher erläutert. Es zeigen:

Fig. 1 eine Gesamtansicht der Sonnenblende,
Fig. 2 bis 5 verschiedene Ausführungsbeispiele der in Fig. 1 strichpunktiert dargestellten Einzelheit der Sonnenblende im Längsschnitt,
Fig. 6 und 7 jeweils einen Schnitt gemäß der Linie VI - VI in Fig. 4 bzw. VII - VII in Fig. 5,
Fig. 8 ein weiteres Ausführungsbeispiel der in Fig. 1 strichpunktiert dargestellten Einzelheit der Sonnenblende im Längsschnitt,
Fig. 9 einen Schnitt IX - IX nach Fig. 8,
Fig. 10 bis 12 weitere Einzelheiten der Sonnenblende.

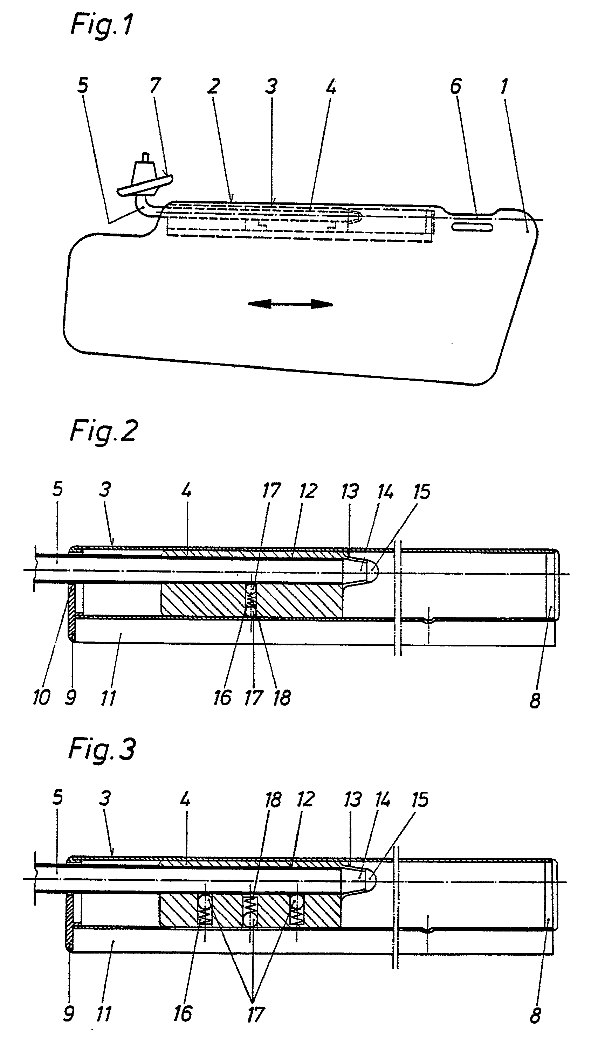

Die neue Sonnenblende nach Fig. 1 besteht aus einem Sonnenblendenkörper 1, der im Bereich seiner oberen Längskante 2 einen darin eingelagerten rohrförmigen Hohlkörper 3 trägt, in dem ein Gleitkörper 4 axial verschiebbar aufgenommen ist, welcher eine Achse 5 lagert. Die Sonnenblende weist weiterhin einen Lagerstift 6 zum Einrasten in ein nicht dargestelltes Gegenlager auf. Die Achse 5 besitzt eine etwa L-förmige Ausbildung, deren langer Schenkel von dem Gleitkörper 4 und deren kurzer Schenkel von einem Schwenklagergehäuse 7 aufgenommen ist. Der Sonnenblendenkörper 1 ist üblicherweise auf dem langen Schenkel der Achse 5 in der aus Fig. 1 ersichtlichen Lage angeordnet. Damit sich Fahrer und Beifahrer eines Fahrzeuges besser vor einfallenden Sonnenstrahlen oder anderer Lichteinwirkung schützen können, ist eine verschiebbare Anordnung des Sonnenblendenkörpers 1 auf dem langen Schenkel der Achse 5 vorgesehen. Die verschiebbare Anordnung des Sonnenblendenkörpers auf der Achse 5 ist besonders dann von Vorteil, wenn sich der Sonnenblendenkörper in einer vor einer vorderen Seitenscheibe eines Fahrzeuges geschwenkten Lage befindet.

Die für die schwenkbewegliche und verschiebbare Lagerung des Sonnenblendenkörpers 1 getroffenen konstruktiven Maßnahmen werden nunmehr im einzelnen zunächst anhand der Fig. 2 bis 7 näher erläutert. Fig. 2 zeigt im Längsschnitt den rohrförmigen Hohlkörper 3, der aus Metall, z.B. Aluminium, oder auch aus Kunststoff bestehen kann, der eine unrunde Querschnittsöffnung aufweist und der beidendig durch Stopfen 8, 9 verschlossen ist, wobei der Stopfen 9 eine Durchgangsöffnung 10 für die Achse 5 aufweist. Der Hohlkörper 3 weist zwei nach unten gerichtete, im Parallelabstand zueinander angeordnete Materialansätze 11 auf, zwischen denen ein den Sonnenblendenkörper aussteifender, z.B. aus Metalldraht gebogener Verstärkungsrahmen (nicht gezeigt) eingeklemmt werden kann. In dem rohrförmigen Hohlkörper 3 ist der Gleitkörper 4, der einen der Querschnittsöffnung des Hohlkörpers 3 angepaßten Querschnitt aufweist, axial verschiebbar gelagert. Der Gleitkörper 4 ist ein in Richtung der Achse 5 langgestreckter Körper mit einer Bohrung 12, in der die Achse 5 drehbeweglich aufgenommen ist. An dem dem Stopfen 8 zugewandten Ende weist der Gleitkörper 4 einen Fortsatz 13 mit einem Innenkonus auf, dessen Längsachse mit der Längsachse der Bohrung 12 zusammenfällt. Der Fortsatz 13 dient im Zusammenwirken mit einem Konus 14 der Achse 5 und einem sich daran axial anschließenden Pilzkopf 15 zur axialen Festlegung der Achse 5 am Gleitkörper 4, indem der Konus 14 in den Innenkonus eingreift und der Pilzkopf das freie Ende des Fortsatzes 13 hintergreift. Der aus Metall oder vorzugsweise thermoplastischem Kunststoff bestehende Gleitkörper 4 weist eine radial angeordnete Öffnung 16 auf, die sich vom Mantel bis zur Bohrung 12 erstreckt und die zur Aufnahme von zwei Andruckelementen 17 und einer dazwischen angeordneten Druckfeder 18, vorzugsweise Schraubendruckfeder, dient. Eines der hier als Kugeln ausgebildeten Andruckelemente 17 wirkt nun einseitig radial auf die Achse 5, während das andere Andruckelement 17 einseitig radial auf die Innenwandung des rohrförmigen Hohlkörpers 3 wirkt. Dadurch ergibt sich eine spielfreie Lagerung der Achse 5 in der Bohrung 12 des Gleitkörpers 4 und eine spielfreie Lagerung des Gleitkörpers 4 im rohrförmigen Hohlkörper 3. Die durch die Druckfeder 18 erzeugten Anpreßkräfte sind so zu dimensionieren, daß einerseits keine selbsttätige Verstellung des Sonnenblendenkörpers eintreten kann, jedoch anderseits eine Verstellung von Hand mühelos bewerkstelligt werden kann.

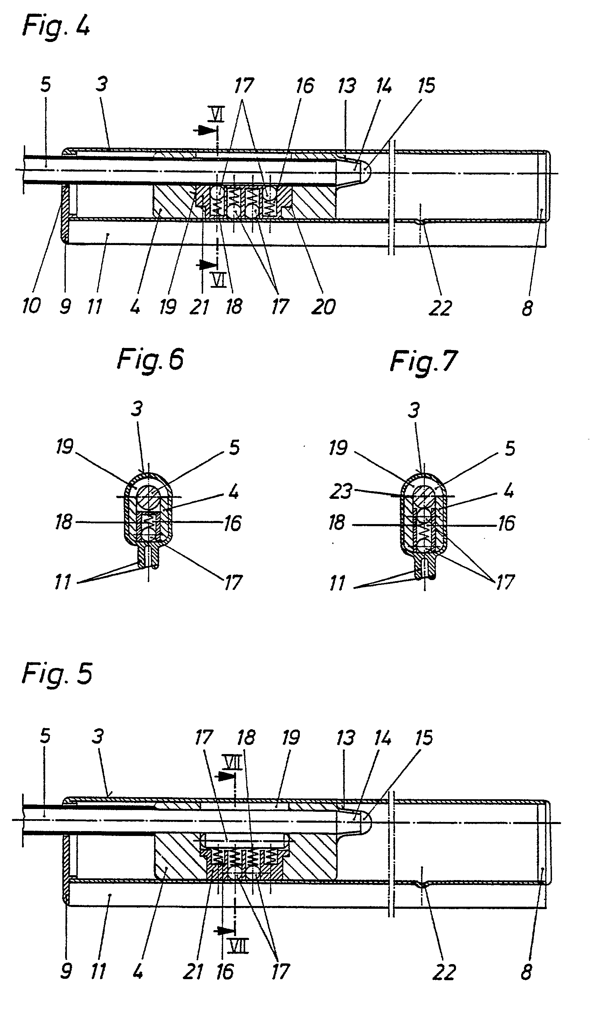

Beim Ausführungsbeispiel nach Fig. 3 sind die mit dem nach Fig. 2 übereinstimmenden Teile mit gleichen Bezugszeichen versehen, was im übrigen auch für die in den Fig. 4 bis 7 dargestellten Ausführungsbeispiele gilt. Der einzige Unterschied des Ausführungsbeispiels nach Fig. 3 gegenüber dem nach Fig. 2 besteht darin, daß der Gleitkörper 4 mehrere (drei) radiale Öffnungen 16 aufweist, die hier als Sacklöcher ausgebildet sind und jeweils eine Druckfeder 18 und ein Andruckelement 17 aufnehmen. Wie Fig. 3 zeigt wirken zwei Andruckelemente 17 mit der Achse 5 und ein Andruckelement 17 mit dem Hohlkörper 3 zusammen.

Beim Ausführungsbeispiel nach Fig. 4 und der dazugehörigen Schnittdarstellung nach Fig. 6, ist der Gleitkörper 4 mit einer ihn senkrecht zur Längsachse durchsetzenden, stufenförmig abgesetzten Öffnung 19 ausgebildet und in die Öffnung 19 ist ein sich am Stufensprung 20 abstützender Lagerkörper 21 eingesetzt, in dem sich die radialen Öffnungen 16 für die Aufnahme der Andruckelemente 17, die hier wieder aus Kugeln bestehen, und die Druckfedern 18 befinden. Der rohrförmige Hohlkörper 3 weist eine kalottenförmige Einziehung 22 oder eine sonstige Gestaltungsunregelmäßigkeit auf, die im Zusammenwirken mit dem Gleitkörper oder einem Andruckelement 17 als zusätzliche axiale Verschiebesicherung dient. Aus Fig. 6 ist ersichtlich, daß der Gleitkörper 4 etwa die Form eines Rechtecks mit einer abgerundeten Schmalseite aufweist und daß der Öffnungsquerschnitt des Hohlkörpers 3 entsprechend gestaltet ist.

Fig. 5 und 7 zeigen ein Ausführungsbeispiel, das im wesentlichen dem nach Fig. 4 und 6 entspricht. Der Unterschied besteht hier darin, daß an der Achse 5 ein Andruckelement 17 in Form einer zylindrischen, parallel zur Achse 5 ausgerichteten Rolle angreift, welche durch vier Druckfedern 18 belastet ist, von denen zwei auch die mit dem Hohlkörper 3 zusammenwirkenden Andruckelemente belasten. Fig. 7 läßt noch eine zum Einrasten des als Rolle ausgebildeten Andruckelements 17 dienende Einkerbung 23 in der Achse 5 erkennen, durch welche der Sonnenblendenkörper 1 in der Nichtgebrauchslage gesichert ist.

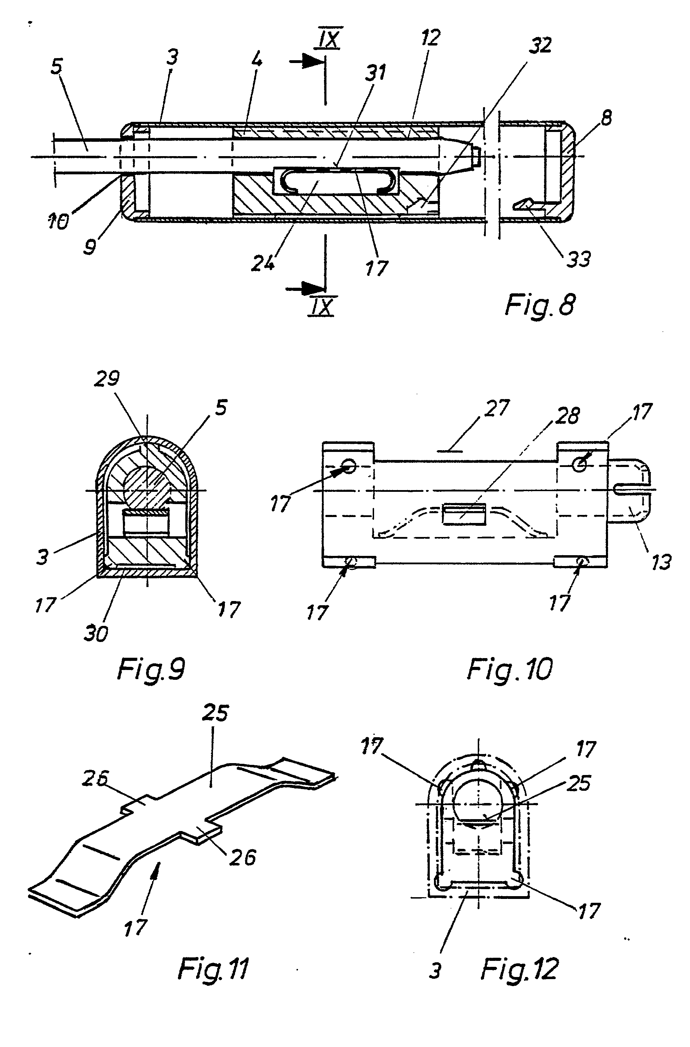

Wie die vorbeschriebenen Ausführungsbeispiele, weist auch das gemäß der Fig. 8 einen rohrförmigen Hohlkörper 3 auf, der beidendig durch Stopfen 8, 9 verschlossen ist, wobei der Stopfen 9 eine Durchgangsöffnung 10 für die Achse 5 besitzt. In dem, eine unrunde Querschnittsöffnung aufweisenden rohrförmigen Hohlkörper 3 ist der Gleitkörper 4 axial verschiebbar und spielfrei gelagert. Der Gleitkörper 4 ist auch hier ein in Richtung der Achse 5 langgestreckter Körper mit einer Bohrung 12, in der die Achse 5 drehbeweglich aufgenommen ist. Die axiale Festlegung der Achse 5 am Gleitkörper 4 kann in der gleichen Weise, wie anhand der Fig. 2 bis 5 beschrieben, erfolgen.

Der Gleitkörper 4 weist jeweils eine Bohrung 12 mit einer radialen Bohrungserweiterung 24 auf, in der ein inneres, als Klemmplatte 25 ausgebildetes Andruckelement 17 aufgenommen ist, welches radial auf die Achse 5 wirkt. Das als Klemmplatte 25 ausgebildete Andruckelemente 17 besteht aus Federstahl bzw. Federstahlblech, weist eine etwa rechteckige Umrißkontur auf und ist an den Schmalenden gleichsinnig umgebogen (Fig. 8) oder abgebogen (Fig. 10 und 12) und mit den Um- oder Abbiegungen nach unten in die radiale Bohrungserweiterung 24 eingesetzt. Weiterhin ist das als Klemmplatte 25 ausgebildete Andruckelement 17 an jeden Längsrand mit einem überstehenden Vorsprung 26 ausgebildet.

Der Gleitkörper kann, wie in Fig. 10 gezeigt, eine etwa den Abmessungen der Klemmplatte 25 entsprechende Öffnung 27 aufweisen, die die Wandung des Gleitkörpers 4 an der der radialen Bohrungserweiterung 24 diametral gegenüberliegenden Seite durchsetzt. Durch die Öffnung 27 wird die Klemmplatte 25 gesteckt und am Gleitkörper dadurch gehalten, daß die Vorsprünge 26 in fensterartige Löcher 28 der die Bohrung 12 umgebenden Wandung eingreifen.

Der Gleitkörper 4 weist wenigstens ein, vorzugsweise aber mehrere gegen den rohrförmigen Hohlkörper 3 wirkende äußere Andruckelemente 17 auf. In Fig. 9 ist ein als Wulst 29 ausgebildetes Andruckelement 17 vorgesehen, das einstückig und materialeinheitlich mit dem Gleitkörper 4 im Kunststoff-Spritzgußverfahren hergestellt ist. Durch eine Aushöhlung 30 des Bodens werden drei sich über die Länge des Andruckelements 4 erstreckende Andruckelemente 17 gebildet.

Bevorzugterweise sind die äußeren Andruckelemente 17, wie in den Fig. 10 und 11 gezeigt, an den Endbereichen des Gleitkörpers 4 angeordnet und dabei so um dessen Umfang verteilt, daß der Gleitkörper 4 allseitig in dem rohrförmigen Hohlkörper 3 abgestützt ist. Weiterhin sind die äußeren Andruckelemente 17 vorzugsweise kalottenförmig ausgebildet, wodurch sich eine äußerst geringe Flächenreibung (Punktberührung) ergibt, ohne daß darunter die toleranzausgleichende Wirkung leidet. Der Gleitkörper 4 besitzt im Bereich der äußeren Andruckelemente 17 gegenüber der Querschnittsöffnung des rohrförmigen Hohlkörpers 3 ein gewisses (geringes) Übermaß, wodurch sich eine spielfreie Lagerung und exakte Führung ergibt, auch wenn davon ausgegangen werden kann, daß dieses Übermaß beim Einführen des Gleitkörpers 4 in den Hohlkörper 3 durch dessen scharfe Kanten am Körperanfang abgeschält oder abgeschabt wird.

In Fig. 8 ist weiterhin dargestellt, daß die Achse 5 im Bereich des inneren Andruckelements (Klemmplatte 25) eine Abflachung 31 aufweist. Weiterhin ist in Fig. 8 dargestellt, daß der Gleitkörper 4 eine hinterschnittene Aufnahme 32 aufweist, in die ein am Stopfen 8 angeordneter Klipskörper druckknopfartig ein- und ausrasten kann. Damit wird eine nicht gewünschte axiale Verschiebung des Sonnenblendenkörpers 1 verhindert. Aufnahme 32 und Klipskörper 33 können auch am jeweils anderen Teil angeordnet sein.

## Patentansprüche

1. Sonnenblende für Fahrzeuge mit einem Sonnenblendenkörper (1), der um eine Achse (5) schwenkbar und auf dieser Achse (5) längsverschiebbar angeordnet ist, wobei die Achse (5) gegen ein axiales Verschieben gesichert in einem Gleitkörper (4) sitzt, der axial verschiebbar in einem rohrförmigen, im Bereich einer Längskante (2) des Sonnenblendenkörpers (1) eingebetteten rohrförmigen Hohlkörper (3) gelagert ist und wobei der Gleitkörper (4) zumindest mit einem Andruckelement (17) ausgerüstet ist, das an der Innenwandung des rohrförmigen Hohlkörpers abgestützt ist, dadurch gekennzeichnet, daß die Achse (5) drehbeweglich in einer Bohrung (12) des Gleitkörpers (4) gelagert ist, daß der Gleitkörper drehfest im rohrförmigen Hohlkörper (3) gelagert ist und daß zumindest ein Andruckelement (17) an der Achse (5) abgestützt ist.

2. Sonnenblende nach Anspruch 1, dadurch gekennzeichnet, daß der Gleitkörper (4) einen unrunden Querschnitt und der rohrförmige Hohlkörper (3) einen diesem angepaßten Öffnungsquerschnitt aufweist.

3. Sonnenblende nach Anspruch 1 oder 2, dadurch gekennzeichnet, daß der Gleitkörper (4) ein in Richtung der Achse (5) langgestreckter Körper ist dessen Querschnitt etwa die Form eines Rechtecks mit einer abgerundeten Schmalseite aufweist.

4. Sonnenblende nach einem der Ansprüche 1 bis 3, dadurch gekennzeichnet, daß der Gleitkörper (4) zumindest eine sich vom Mantel bis zur Bohrung (12) erstreckende radiale Öffnung (16) aufweist und daß in der Öffnung (16) zwei Andruckelemente (17) und eine zwischen diesen sitzende, die Andruckelemente (17) zum einen gegen die Achse (5) und zum anderen gegen den Hohlkörper (3) belastende Druckfeder (18) angeordnet sind.

5. Sonnenblende nach einem der Ansprüche 1 bis 3, dadurch gekennzeichnet, daß der Gleitkörper (4) mehrere, in axialer Richtung nebeneinander befindliche, radiale Öffnungen (16) aufweist, in denen jeweils eine Druckfeder (18) und jeweils zumindest ein Andruckelement (17) angeordnet sind.

6. Sonnenblende nach einem der Ansprüche 1 bis 5, dadurch gekennzeichnet, daß die Andruckelemente (17) aus Kugeln bestehen.

7. Sonnenblende nach einem der Ansprüche 1 bis 5, dadurch gekennzeichnet, daß die Andruckelemente (17) aus gegen den rohrförmigen Hohlkörper (3) wirkenden Kugeln und aus einer gegen die Achse (5) wirkenden, parallel zur Achse (5) ausgerichteten Rolle bestehen.

8. Sonnenblende nach einem der Ansprüche 1 bis 7, dadurch gekennzeichnet, daß die Achse (5) eine muldenförmige oder rinnenförmige Rastausnehmung (Einkerbung 23) zum Einrasten eines oder mehrerer Andruckelemente (17) aufweist.

9. Sonnenblende nach einem der Ansprüche 1 bis 8, dadurch gekennzeichnet, daß die Andruckelemente (17) und die Druckfeder (n) (18) in einem, in einer radialen Ausnehmung (16) des Gleitkörpers (4) sitzenden Lagerkörper (21) aus verschleißfestem Material angeordnet sind.

10. Sonnenblende nach einem der Ansprüche 1 bis 3, dadurch gekennzeichnet, daß der Gleitkörper (4) einerseits mit einem inneren, radial gegen die Achse (5) wirkenden federelastischen Andruckelement (17) ausgerüstet ist und andererseits über den Umfang verteilte, die Abstützung des Gleitkörpers (4) im Hohlkörper (3) bewirkende äußere Andruckelemente (17) aufweist.

11. Sonnenblende nach einem der Ansprüche 1 bis 3 und 10, dadurch gekennzeichnet, daß die Bohrung (12) des Gleitkörpers (4) eine radiale Bohrungserweiterung (24) aufweist, die ein als federnde Klemmplatte (25) ausgebildetes Andruckelement (17) aufnimmt.

12. Sonnenblende nach Anspruch 11, dadurch gekennzeichnet, daß die die Bohrung (12) im Gleitkörper (4) umgebende Wandung auf der der radialen Erweiterung (24) diametral gegenüberliegenden Seite eine etwa den Abmessungen der Klemmplatte entsprechende Öffnung (27) aufweist.

13. Sonnenblende nach Anspruch 11 oder 12, dadurch gekennzeichnet, daß die Klemmplatte (25) aus Federstahl besteht, eine etwa rechteckige Umrißkontur aufweist, an den Schmalenden gleichsinnig um- oder abgebogen ist, mit den Um- oder Abbiegungen nach unten in die radiale Bohrungserweiterung (24) eingesetzt ist, an jedem Längsrand einen diesen überragenden Vorsprung (26) aufweist und im Gleitkörper (4) dadurch gehalten ist, daß die Vorsprünge (26) in fensterartige Löcher (28) der die Bohrung (12) des Gleitkörpers (4) umgebenden Wandung eingreifen, wobei die Löcher (28) senkrecht zur Ebene der Klemmplatte (25) erweitert sind.

14. Sonnenblende nach einem der Ansprüche 1 bis 3 und 10 bis 13, dadurch gekennzeichnet, daß die Achse (5) in dem mit dem Andruckelement (17) bzw. der Klemmplatte (25) in Berührung kommenden Bereich eine Abflachung (31) aufweist.

15. Sonnenblende nach einem der Ansprüche 1 bis 3 und 10 bis 14, dadurch gekennzeichnet, daß die über den Umfang des Gleitkörpers (4) verteilten äußeren Andruckelemente (17) eine kalottenartige Gestaltung aufweisen.

16. Sonnenblende nach Anspruch 15, dadurch gekennzeichnet, daß die äußeren Andruckelemente (17) an den Endbereichen des Gleitkörpers (4) angeordnet und dabei so um dessen Umfang verteilt sind, daß der Gleitkörper (4) allseitig in dem rohrförmigen Hohlkörper (3) abgestützt ist, so daß die Gleitführung über die Andruckelemente (17) bewirkt wird.

17. Sonnenblende nach Anspruch 10, 15 oder 16, dadurch gekennzeichnet, daß der Gleitkörper (4) im Bereich der äußeren Andruckelemente (17) ein geringes Übermaß gegenüber dem Öffnungsquerschnitt des rohrförmigen Hohlkörpers (3) aufweist.

18. Sonnenblende nach einem der Ansprüche 1 bis 17, dadurch gekennzeichnet, daß der Gleitkörper (4) als Kunststoff-Spritzgußteil ausgebildet ist.

19. Sonnenblende nach einem der Ansprüche 1 bis 3 und 10 bis 18, dadurch gekennzeichnet, daß die äußeren Andruckelemente (17) einstückig und materialeinheitlich mit dem Gleitkörper (4) ausgebildet sind.

20. Sonnenblende nach einem der Ansprüche 1 bis 19, dadurch gekennzeichnet, daß die Achse (5) zwecks axialer Festlegung am Gleitkörper (4) einendig einen Konus (14) und einen den Konus (14) radial überragenden Pilzkopf (15) trägt, wobei der Konus (14) in einen am Gleitkörper (4) angeordneten Fortsatz (13) mit entsprechendem Gegenkonus eingreift und der Pilzkopf (15) das Ende des Fortsatzes (13) hintergreift.

21. Sonnenblende nach einem der Ansprüche 1 bis 20, dadurch gekennzeichnet, daß der rohrförmige Hohlkörper (3), der vorzugsweise aus Leichtmetall besteht, an den Enden durch Stopfen (8, 9) verschlossen ist, von denen einer (9) eine Führungsöffnung (10) zum Durchtritt der Achse (5) aufweist, während der andere (8) eine mit dem Gleitkörper (4) zusammenwirkende Einrichtung zum druckknopfartigen Ein- und Ausrasten aufweist, wobei ein Teil mit einer Aufnahme (32) und das andere Teil mit einem Klipskörpers (33) versehen ist.

## Claims

1. A vehicle sun visor having a body (19) pivotable around a shaft (5) and slidable along the shaft (5), the shaft (5) being prevented from axial movement by securing in a sliding member (4) which is mounted for axial movement in a tubular hollow member (3) embedded in the sun visor body (1) near a longitudinal edge (2), the sliding member (4) being equipped with at least one pressure element (17) bearing against the inner wall of the tubular hollow member, characterised in that the shaft (5) is rotatably mounted in a bore (12) in the sliding member (4), the sliding member is non-rotatably mounted in the tubular hollow member (3), and at least one pressure element (17) bears against the shaft (5).

2. A sun visor according to claim 1, characterised in that the sliding member (4) has a non-circular cross-section and the tubular hollow member (3) has an opening cross-section adapted thereto.

3. A sun visor according to claim 1 or 2, characterised in that the sliding member (4) is elongated in the direction of the shaft (5) and its cross-section is substantially rectangular with a rounded minor side.

4. A sun visor according to any of claims 1 to 3, characterised in that the sliding member (4) has at least one radial opening (16) extending from the jacket to the bore (12), and two pressure elements (17) are disposed in the opening (16) together with a pressure spring (18) disposed between the pressure elements (17) and biasing them on the one hand against the shaft (5) and on the other hand against the hollow member (3).

5. A sun visor according to any of claims 1 to 3, characterised in that the sliding member (4) has a number of successive radial openings (16) in the axial direction with each containing one pressure spring (18) and at least one pressure element (17).

6. A sun visor according to any of claims 1 to 5, characterised in that the pressure elements (17) comprise balls.

7. A sun visor according to any of claims 1 to 5, characterised in that the pressure elements (17) comprise balls acting against the tubular hollow member (3) and a roller acting against the shaft (5) and aligned parallel thereto.

8. A sun visor according to any of claims 1 to 7, characterised in that the shaft (5) is formed with a trough-like or channel-like locking recess (indentation 23) for engaging one or more pressure elements (17).

9. A sun visor according to any of claims 1 to 8, characterised in that the pressure elements (17) and the pressure spring or springs (18) are disposed in a bearing member (21) made of hard-wearing material and disposed in a radial recess (16) in the sliding member (4).

10. A sun visor according to any of claims 1 to 3, characterised in that the sliding member (4) is equipped on the one hand with an inner resilient pressure element (17) acting radially against the shaft (5) and on the other hand with peripherally-distributed outer pressure elements (17) which bear against the sliding member (4) in the hollow member (3).

11. A sun visor according to any of claims 1 to 3, and 10, characterised in that the bore (12) in the sliding member (4) has a radial wide part (24) which receives a pressure element (17) in the form of a resilient clamping plate (25).

12. A sun visor according to claim 11, characterised in that the wall surrounding the bore (12) in the sliding member (4) has an opening (27) substantially equal in size to the clamping plate and on the side diametrically opposite the radial wide part (24).

13. A sun visor according to claim 11 or 12, characterised in that the clamping plate (25) is made of spring steel, has an approximately rectangular contour, is bent in the same direction round or down at the narrow ends, is inserted via the round or downward bends into the radial wide part (24) of the bore, has a projection (26) extending beyond each longitudinal edge, and is held in the sliding member (4) as follows: the projections (26) engage in window-like holes (25) in the wall surrounding the bore (12) in the sliding member (4), and the holes (28) widen perpendicular to the plane of the clamping plate (25).

14. A sun visor according to any of claims 1 to 3 and 10 to 13, characterised in that the shaft (5) has a flat part (31) in the region coming into contact with the pressure element (17) or the clamping plate (25).

15. A sun visor according to any of claims 1 to 3 and 10 to 14, characterised in that the outer pressure elements (17) distributed around the periphery of the sliding member (4) have a cap-like shape.

16. A sun visor according to claim 15, characterised in that the outer pressure elements (17) are disposed at the corner regions of the sliding member (4) and are distributed around its periphery so that the sliding member (4) is held on all sides in the tubular hollow member (3), so that the sliding guidance is via the pressure elements (17).

17. A sun visor according to claims 10, 15 or 16, characterised in that the sliding member (4), in the region of the outer pressure elements (17), is slightly overdimensioned compared with the opening cross-section of the tubular hollow member (3).

18. A sun visor according to any of claims 1 to 17, characterised in that the sliding member (4) is a plastics injection-moulded part.

19. A sun visor according to any of claims 1 to 3 and 10 to 18, characterised in that the outer pressure elements (17) are integral with and of the same material as the sliding member (4).

20. A sun visor according to any of claims 1 to 19, characterised in that the shaft (5) supports a cone (14) at one end for axially securing to the sliding member (4) and also supports a mushroom head (5) which projects radially beyond the cone (14), the cone (14) engaging a corresponding companion cone in an extension (13) disposed on the sliding member (4) and the mushroom head (15) engaging behind the end of the extension (13).

21. A sun visor according to any of claims 1 to 20, characterised in that the tubular member (3), which is preferably made of light metal, is closed at the ends by plugs (8, 9), one plug (9) having a guide opening (10) for the shaft (5), whereas the other plug (8) has a device cooperating with the sliding member (4) for the purpose of engaging and disengaging like a push button, one part having a recess (32) and the other part having a snap-fastening member (33).

**Revendications**

1. Pare-soleil pour véhicules automobiles comportant un corps de pare-soleil (1) qui est disposé de manière à pouvoir pivoter autour d'un axe (5) et à coulisser longitudinalement sur cet axe (5), l'axe (5) étant fixé de manière à ne pouvoir se déplacer axialement dans un corps coulissant (4), lequel est monté de manière à pouvoir coulisser axialement dans un corps creux, (3) tubulaire, logé dans la zone d'un grand côté (2) du corps de pare-soleil (1), et le corps coulissant (4) étant au moins muni d'un élément de pression (17) qui prend appui contre la paroi intérieure du corps creux tubulaire, caractérisé en ce que l'axe (5) est monté de manière à pouvoir tourner dans un perçage (12) du corps coulissant (4), en ce que le corps coulissant est monté fixe en rotation dans le corps creux (3) tubulaire, et en ce qu'au moins un élément de pression (17) prend appui contre l'axe (5).

2. Pare-soleil selon la revendication 1, caractérisé en ce que le corps coulissant (4) a une section transversale non ronde et le corps creux (3) tubulaire une section d'ouverture adaptée à celle-ci.

3. Pare-soleil selon la revendication 1 ou 2, caractérisé en ce que le corps coulissant (4) est un corps allongé dans la direction de l'axe (5), dont la section transversale a à peu près la forme d'un rectangle avec un petit côté arrondi.

4. Pare-soleil selon l'une des revendications 1 à 3, caractérisé en ce que le corps coulissant (4) présente au moins une ouverture (16) radiale s'étendant depuis l'enveloppe jusqu'au perçage (12), et en ce que deux éléments de pression (17) et un ressort de pression (17) placé entre ceux-ci, agissant sur les éléments de pression (17) d'une part contre l'axe (5), et d'autre part contre le corps creux (3), sont disposés dans l'ouverture (16).

5. Pare-soleil selon l'une des revendications 1 à 3, caractérisé en ce que le corps coulissant (4) comporte plusieurs ouvertures (16) radiales, disposées côte à côte axialement, dans chacune desquelles sont placés un ressort de pression (18) et au moins un élément de pression (17).

6. Pare-soleil selon l'une des revendications 1 à 5, caractérisé en ce que les éléments de pression (17) sont des billes.

7. Pare-soleil selon l'une des revendications 1 à 5, caractérisé en ce que les éléments de pression (17) sont des billes agissant contre le corps creux (3) tubulaire, et un rouleau agissant contre l'axe (5), et parallèle à celui-ci.

8. Pare-soleil selon l'une des revendications 1 à 7, caractérisé en ce que l'axe (5) comporte un évidement d'encliquetage (encoche 23) en forme de caniveau ou de rigole, pour l'emprisonnement d'un ou plusieurs éléments de pression (17).

9. Pare-soleil selon l'une des revendications 1 à 8, caractérisé en ce que les éléments de pression (17) et le (les) ressort(s) de pression (18) sont placés dans un corps de palier (21), en matériau résistant à l'usure, logé dans un évidement (16) radial du corps coulissant (4).

10. Pare-soleil selon l'une des revendications 1 à 3, caractérisé en ce que le corps coulissant (4) est muni d'une part d'un élément de pression (17) intérieur, élastique, agissant radialement contre l'axe (5), et d'autre part d'éléments de pression (17) extérieurs, répartis sur le pourtour, servant d'appui au corps coulissant (4) dans le corps creux (3).

11. Pare-soleil selon l'une des revendications 1 à 3 et 10, caractérisé en ce que le perçage (12) du corps coulissant (4) présente un élargissement (24) radial dans lequel est logé un élément de pression (17) servant de plaque de serrage (25) élastique.

12. Pare-soleil selon la revendication 11, caractérisé en ce que la paroi entourant le perçage (12) pratiqué dans le corps coulissant (4), présente, sur le côté diamétralement opposé à l'élargissement (24) radial, une ouverture (27) correspondant à peu près aux dimensions de la plaque de serrage.

13. Pare-soleil selon la revendication 11 ou 12, caractérisé en ce que la plaque de serrage (27) est en acier pour ressort, présente un contour à peu près rectangulaire, est repliée ou pliée dans le même sens sur ses petits côtés, est introduite par ses parties repliées ou pliées vers le bas, dans l'élargissement radial (24) du perçage, comporte sur chaque grand côté une saillie (26) dépassant de celui-ci, et est maintenue dans le corps coulissant (4), de manière que les saillies (26) s'engagent dans des trous (28) en forme de fenêtre pratiqués dans la paroi entourant le perçage (12) du corps coulissant (4), les trous (28) s'élargissant perpendiculairement au plan de la plaque de serrage (25).

14. Pare-soleil selon l'une des revendications 1 à 3 et 10 à 13, caractérisé en ce que l'axe (5) présente une surface aplatie (31), dans la zone en contact avec l'élément de pression (7) ou la plaque de serrage (25).

15. Pare-soleil selon l'une des revendications 1 à 3 et 10 à 14, caractérisé en ce que les éléments de pression (17) extérieurs, répartis sur le pourtour du corps coulissant (4), ont une forme en calotte.

16. Pare-soleil selon la revendication 15, caractérisé en ce que les éléments de pression (17) extérieurs sont placés dans les zones d'extrémité du corps coulissant (4), et sont répartis sur son pourtour de telle sorte que le corps coulissant (4) est soutenu de tous côtés dans le corps creux (3) tubulaire, de manière que le guidage coulissant soit assuré par l'intermédiaire des éléments de pression (17).

17. Pare-soleil selon la revendication 10, 15 ou 16, caractérisé en ce que le corps coulissant (4) présente dans la zone des éléments de pression (17) extérieurs, une légère surcote par rapport à la section transversale d'ouverture du corps creux (3) tubulaire.

18. Pare-soleil selon l'une des revendications 1 à 17, caractérisé en ce que le corps coulissant (4) est une pièce en matière plastique moulée par injection.

19. Pare-soleil selon l'une des revendications 1 à 3 et 10 à 18, caractérisé en ce que les éléments de pression (17) extérieurs sont réalisés d'une seule pièce avec le corps coulissant (4), et dans la même matière.

20. Pare-soleil selon l'une des revendications 1 à 19, caractérisé en ce que l'axe (5) porte à une extrémité, pour fixation axiale sur le corps coulissant (4), un cône (14) et une tête de champignon (15) faisant saillie radialement par rapport au cône (14), le cône (14) pénétrant dans un prolongement (13) avec contre-cône correspondant, disposé sur le corps coulissant (4), et la tête de champignon (15) passant derrière l'extrémité du prolongement (13).

21. Pare-soleil selon l'une des revendications 1 à 20, caractérisé en ce que le corps creux (3) tubulaire qui est de préférence en métal léger, est fermé à ses extrémités par des bouchons (8, 9), dont l'un (9) comporte une ouverture de guidage (10) pour le passage de l'axe (5), tandis que l'autre (8) comporte un dispositif coopérant avec le corps coulissant (4), pour fermer et ouvrir à la manière d'un bouton-pression, une partie étant pourvue d'un logement (32), et l'autre partie d'un corps à clips (33).

EP 0 231 440 B1

**Fig.1**

**Fig.2**

**Fig.3**

*Fig. 4*

*Fig. 6*

*Fig. 7*

*Fig. 5*

Fig.8

Fig.9

Fig.10

Fig.11

Fig.12